Europäisches Patentamt

(19) European Patent Office

Office européen des brevets

(11) Publication number: **0 044 746**

**A1**

(12) **EUROPEAN PATENT APPLICATION**

(21) Application number: 81303350.3

(22) Date of filing: 22.07.81

(51) Int. Cl.³: **B 62 D 35/00**

(30) Priority: 22.07.80 US 171185
20.07.81 US 285004

(43) Date of publication of application:
27.01.82 Bulletin 82/4

(84) Designated Contracting States:
DE FR GB IT NL SE

(71) Applicant: Rudkin-Wiley Corporation
760 Honeyspot Road
Stratford Connecticut(US)

(72) Inventor: Wiley, Nathaniel C.
38 Kettle Creek Road
Weston Connecticut 06880(US)

(74) Representative: Wilson, Joseph Martin et al,
WITHERS & ROGERS 4 Dyer's Buildings Holborn
London EC1N 2JT(GB)

(54) Nose fairing assembly.

(57) By providing a nose fairing member (22) having a smooth, synclastically curved forward facing surface (26) with the surface's forwardmost projection occurring along a line substantially defining the top of the forward facing surface, proper shapes and dimensions, and a plurality of vortex generators (24) in juxtaposed spaced relationship to each other and positioned along the rear top edge of the nose fairing member (22), a unique nose fairing system (20) is achieved which is capable of substantially reducing air drag resistance. In the preferred embodiment, the vortex generators (24) are canted in alternate directions from the line of motion of the vehicle on which the nose fairing system (20) is mounted.

FIG. I

NOSE FAIRING ASSEMBLY

- 1 -

Technical Field

This invention relates to drag reducing apparatus for use on land vehicles and more particularly to a combined nose fairing member incorporating vortex generators for mounting to land vehicles, particularly ꭓꭓꭓꭓꭓꭓꭓꭓꭓꭓꭓ trucks.

## Background Art

It has long been well known that land vehicles, especial single chassis trucks and tractor trailer trucks consume a great deal of energy in the form of fuel in overcoming air resistance as a vehicle moves through the air fluid. In an attempt to reduce this excessive energy consumption, various systems have been developed in an attempt to reduce the vehicle's fuel consumption.

The most significant contribution to this art was made by Walter Selden Saunders in his discovery of a baffle or wind deflector, as disclosed in U.S. Patent Nos. 3,241,876; 3,309,131; and 3,348,873. In addition, Mr. Saunders also discovered that energy can be conserved by employing a vortex stabilizer and initially disclosed this advance in U.S. Patent No. 3,697,120. In U.S. Patent No. 4,068,883, Mr. Saunders, with joint inventor Steven L. Meinecke, disclosed a combined and improved wind deflector configuratic and vortex stabilizer combination for use on single chassis trucks.

In addition to upstanding baffles and vortex stabilizer: drag reducing equipment for tractor trailers have taken the form of contoured fairings. The principal contoured fairing for tractor trailers is disclosed in U.S. Patent 4,021,069.

Although these prior art devices have achieved varying degrees of success in reducing the aerodynamic drag resistan as the vehicle moves through the fluid, these prior art devices have been unable to completely satisfy all of the requirements of the vehicle owners. In particular, the prior art systems directed to contoured fairings have been unable to achieve their desired goal and, instead of obtaini a completely streamlined controlled air flow pattern which substantially reduces the air drag resistance, these contour fairings have only been able to partially control the air flow. Consequently, these prior art fairings have not achieved the desired fuel consumption reductions.

Therefore, it is a principal object of the present invention to provide an improved nose fairing which is capable of completely controlling the air flow and capable of providing a greatly improved streamling effect and fuel consumption reductions.

Another object of the present invention is to provide a nose fairing having the characteristic features defined above which is completely compatible with all xixgixxxxxxxxx truck configurations.

Another object of the present invention is to provide a nose fairing system having the characteristic features defined above which incorporates a plurality of vortex generators to assure controlled air flow and drag reduction.

Another object of the present invention is to provide a nose fairing system having the characteristic features defined above which incorporate a compact profile, is lightweight, and quickly and easily installed.

Other and more specific objects will in part be obvious and will in part appear hereinafter.

## Disclosure of the Invention

The nose fairing system of the present invention overcomes the prior art deficiencies by incorporating a smoothly curved forward facing surface designed for optimum aerodynamic flow control, with the top portion of the nose fairing member comprising the maximum forward projection. In addition, the nose fairing system of the present invention incorporates a plurality of vortex generators extending along the top rear edge of the nose fairing member, with the vortex generators being positioned for optimum flow retention and control.

The combination of the vortex generators with the nose fairing member of the present invention achieves a unique nose fairing system which provides a significant advance over prior art fairing constructions. One of the principal difficulties with prior art fairing constructions has been the fairing's inability to retain laminar flow along the top surface thereof. Consequently, the air flow became detached from the fairing and the top and sides of the trailer or van. As a result, the desired drag reduction goal for these prior art fairings has not been attainable.

The present invention overcomes this prior art inability by properly shaping and dimensioning of the nose fairing and the incorporation of the plurality of vortex generators along the rear horizontal edge of the nose fairing. By employing the vortex generators, a plurality of small vortices are created which prevents the air flow from becoming detached. Instead, the air flow is maintained substantially horizontal and continuous along the top surface of the van. As a result, the nose fairing system of this invention attains a substantially improved aerodynamic drag reduction over prior art fairings and provides greatly enhanced cost savings in reduced fuel consumption.

In the preferred embodiment, the nose fairing member of the present invention comprises a molded plastic unit which is lightweight and easy handled. In addition, the nose fairing member is constructed for quick assembly to any truck configuration with simplicity and ease.

The invention accordingly comprises the features of
construction, combination of elements and arrangement of
parts which will be exemplified in the construction hereinafter set forth and the scope of the invention will be
indicated in the claims.

0044746

## Brief Description of the Drawings

For a fuller understaning of the nature and objects of the invention reference should be had to the following detailed description taken in conjunction with the accompany drawings, in which:

FIGURE 1 is a perspective view of the nose fairing system of this invention mounted to a front panel of the van of a convention ~~single~~ ~~chassis~~ truck;

FIGURE 2 is a top plan view of the nose fairing system of this invention, mounted as in FIGURE 1; and

FIGURE 3 is a side elevation view of the nose fairing system of this invention, mounted as in FIGURE 1.

## Best Mode for Carrying Out the Invention

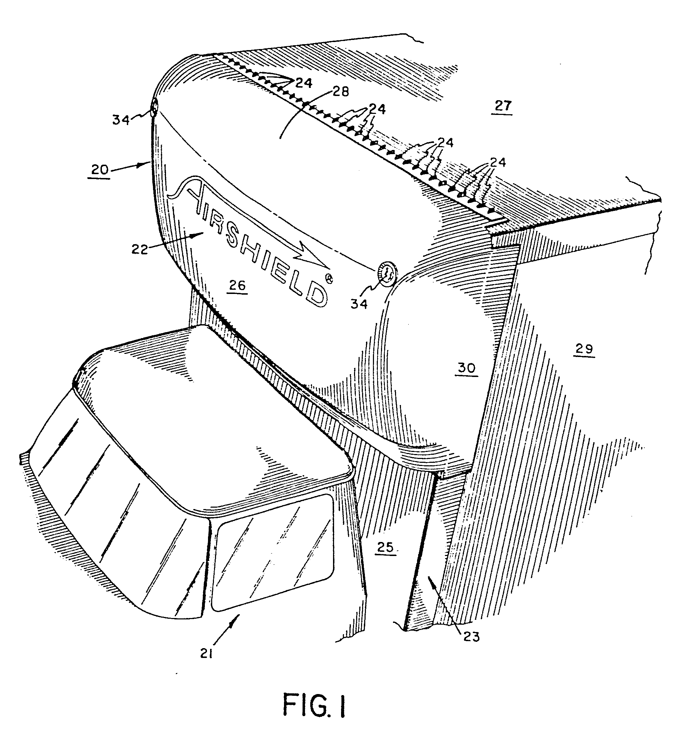

In FIGURE 1, nose fairing system 20 of this invention is shown mounted to front panel 25 of van 23 of single chassis truck 21. As shown in FIGURE 1, nose fairing system 20 comprises a nose fairing member 22 and a plurality of vortex generators 24, secured to nose fairing member 22 and van 23 along the rear horizontal surface of nose fairing member 22.

As shown in FIGURES 1, 2 and 3, the preferred embodiment of nose fairing member 22 comprises a substantially smooth, synclastically curved forward facing surface 26, with the forwardmost projection thereof being along a line which substantially defines the top of forward facing surface 26. In addition, this forwardmost projection is in smooth, blended convergence with a rearwardly extending surface 28. Surface 28 incorporates a substantially flat, horizontal terminating edge portion along which nose fairing member 22 is securely mounted to top portion 27 of van 23 of single chassis truck 21.

In addition, nose fairing member 22 comprises two rearwardly extending side surfaces 30 and 32, both of which are in smooth, blended convergence with the opposed side edges of forward facing surface 26. Side surfaces 30 and 32 each incorporate a substantially flat, vertical terminating edge portion along which nose fairing member 22 is securely mounted to side portions 29 of van 23.

In the preferred embodiment, the nose fairing system of the present invention employs a plurality of differently sized nose fairing members each constructed for mounting to a particular singlexchassis truck. In general, the only variation between these alternative sizes is the overall top to bottom length, since most vans comprise a substantially standard width. However, regardless of the overall length hei of a particular nose fairing, the forwardmost projection of the forward facing surface 26 is controlled to be above the horizontal central plane of each nose fairing member configurat and positioned to substantially define the top of forward facing surface 26.

This forwardmost projection with its smooth blended convergence with the rearwardly extending surface 28 assures smooth, controlled air flow from this forwardmost projection to top portion 27 of van 23.

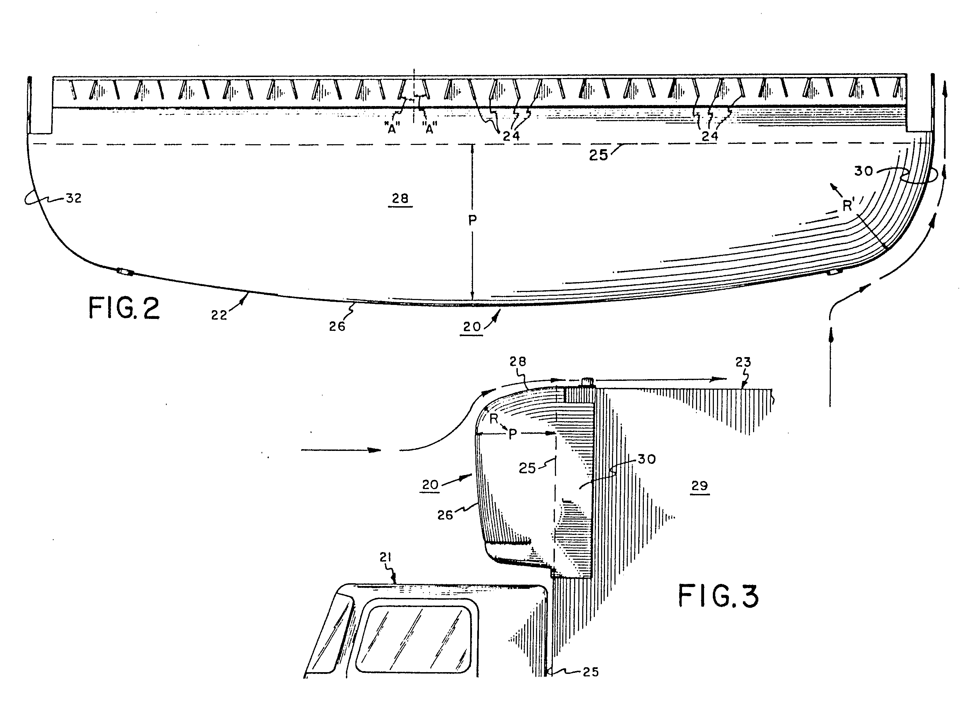

By Referring to FIGURES 1 and 2, the preferred construction for vortex generators 24 can best be seen. As shown therein, vortex generators 24 comprise a plurality of small, flat fins extending substantially perpendicularly to top surface 27 of van 23. Each vortex generator 24 is about 65mm to 75mm in length and about 25mm to 40mm in height. Each vortex generator 24 is spaced apart from adjacent vortex generators by a distance equal to about 75mm.

As shown in FIGURES 1, 2 and 3, vortex generators 24 extend substantially the entire distance between sides 29 of van 23. As a result, a plurality of vortex generators interact with the air controllably flowing over the forwardmost projection of nose fairing member 22 towards top portion 27 of van 23.

As best seen in FIGURE 2, vortex generators 24 are canted or angled relative to the line of motion of van 23 at an angle "A". Presently, it is believed that angle "A" for vortex generators 24 should be between 5° and 25°, with between 10° and 20° being preferred. Preferably each vortex generator is angled in alternated directions at the desired angle.

In FIGURE 2, the flow path for controllably deflecting the oncoming air in order to reduce the drag of the single chassis truck is shown for air coming along the side of nose fairing system 20.

As shown therein, air impinging upon nose fairing system 20 is smoothly controllably diverted around the side of nose fairing member 22, extending in controlled flow to side 29 of van 23. This smooth controlled flow path assures the maintenance of laminar flow and substantially reduces the drag that would otherwise be realized by the leading edge of the van impinging upon the air as the van would move through the air.

Those skilled in the art will note that the foremost projection of the nose fairing 20 is always substantially at or above the air stagnation point.

Because of practical considerations, such as to provide for tilting the cab forward to access the motor and so as not to interfere with air-conditioning apparatus mounted on the top of the cab and the like, the maximum forward projection dimension P of the nose fairing 20 in front of the front surface 25 of the van body 29 is never greater than about 600 millimeters and preferably it is about 458 millimeters.

It should also be noted that the areas of greatest curvature of the upper portions of the nose fairing and particularly the radius R along the vertical midplane thereof is at the foremost projection, while the radius at the rear portion of the fairing just before it merges into the truck body is greater. The radii increase until the fairing is flat to smoothly merge with the top of the van 23. Similarly the forward radius R' of the side portion shown in FIGURES 1 and 2 is the smallest and increases to smoothly merge into a flat surface merging with the sides 29 of the van. This is important to provide for smooth attachment of the air to the van body. I have found that the radius of greatest curvature R, in order to provide for smooth attached flow across the nose fairing, should not be less than 150 millimeters and preferably I make it 186 millimeters. Thus I provide a ratio of P (the foremost projection) to R of 458 to 186, slightly greater than 2 to 1. This ratio is preferably never less than 2 to 1 to provide for smooth attached flow of the air along the fairing.

It will be noted that below the winglike upper portion, the surface extends downwardly in a radius very much greater than the smallest radii in both the horizontal and vertical cross section. In fact it could be flat, but since the fairing is made of fiberglass reinforced plastic, it is gently curved for structural reasons. Furthermore, it is inclined inwardly toward the bottom to accommodate the horizontal vortex that forms in front of it and to facilitate tilting the cab forward in some trucks.

In the horizontal cross section at the foremost projection the initial radius is very large, about 5000 millimeters. The radius R' is 220 millimeters. The horizontal width of the fairing depends on the width of the van body, but is approximately 2500 millimeters.

Of course, in order to achieve a complete and efficient drag reduction, the flow path of the air impinging upon the otherwise essentially flat leading vertical panel 25 of van 23 must be controlled and smoothly diverted. In addition, any such fairing system must not only divert the air flow up and away from the vertically flat panel 25 of van 23, but must also control the flow path of the diverted air to reattach along top portion 27 of van 23.

As briefly discussed above, prior art fairing systems have failed in this respect and have been unable to achieve reattachment of the air flow along the top portion 27 of van 23. As a result, the efficacy of these prior art fairings has been substantially curtailed.

As shown in FIGURE 3, the oncoming air flow path impinges upon nose fairing system 20 of this invention and controllably diverts the air flow upwardly towards top portion 27 of van 23. As the air flow reaches vortex generators 24, the air contacts vortex generators 24 and creates a plurality of small vortices at each vortex generator. These individual vortices create a suction force which overcomes the tendency of the air flow to separate from top surface 28 of nose fairing member 22 and top portion 27 of van 23.

Instead, the plurality of vortices created by vortex generators 24 draw the air flow back downwardly and maintain the air flow in substantial continuous contact with top portion 27 of van 23. In this way, nose fairing system 20 of the present invention achieves the desired air flow pattern heretofore unobtainable with prior art configurations.

An additional feature of the nose fairing configuration of the present invention is realized by referring to the air flow path shown in FIGURE 3. It is believed that by constructing nose fairing member 22 in the manner described with the

forwardmost projection of front facing surface 26 being along the top of forward facing surface 26, all oncoming air, which is below the forwardmost projection, initially forms and subsequently maintains a vortex which extends substantially the entire width of the cab of single chassis truck 21. As a result, all subsequent air flow is deflected upwardly and over the top of nose fairing member 22 and along top portion 27 of van 23 as described above.

One additional feature of nose fairing 22 of the present invention is shown in FIGURE 1, wherein lights 34 can best be seen. Lights 34 are moulded in place on nose fairing member 22 in order to provide the illuminated visibility required for single chassis trucks.

It will thus be seen that the objects set forth above among those made apparent from the preceding description, are efficiently attained and, since certain changes may be made in the above construction without departing from the scope of the invention, it is intended that all matter contained in the above description or shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween.

Having described my invention, what I claim as new and desire to secure by Letters Patent is:

CLAIMS

1. A contoured front surface for the upper portion of the front of a van body, said contoured front surface projecting out from the front of said van body and presenting a generally convex surface in front of said van body: characterized by the vertical cross section of the top of said contoured surface being winglike from the van body to the foremost projection thereof, having its smallest radius at the front and an increasing radius towards the back to become flat and merge into the top of said van body, and extending downwardly from said foremost projection in a surface of a curvature much greater than said smallest radius or flat.

2. The contoured surface defined in Claim 1 wherein the ratio of the greatest distance said contoured surface extends out from the front of said van body to the radius of the top winglike portion thereof having the smallest radius is not less than 2 to 1.

3. The contoured surface defined in Claims 1 or 2 wherein said contoured surface projects outwardly from said van body a distance no greater than 600 millimeters.

4. The contoured surface defined in Claims 1 to 3 wherein all radii of said winglike portion of said surface are greater than 150 millimeters.

5. The contoured surface defined in Claims 1 to 4 wherein said projecting distance is substantially 460mm and said smallest radius is substantially 190mm.

6.    The contoured surface defined in Claims 1 to 5 wherein the foremost projection thereof extends substantially above the center thereof.

7.    The contoured surface defined in Claims 1 to 6 wherein the contoured surface is angled back toward the van body below the foremost projection thereof.

8.    The contoured surface defined in Claims 1 to 7 wherein the horizontal cross section of each side thereof is winglike with a foreward portion of smallest radius, and an increasing radius toward the back to become flat and merge into the side of the van body.

9.    The contoured surface defined in Claim 8 wherein all radii of the horizontal cross section of each side thereof are greater than 150 millimeters.

10.    The contoured surface defined in Claims 1 to 9 and a plurality of vortex generators in juxtaposed spaced facing relationship to each other and adapted for mounting to the rear top surface of said contoured surface, thereby providing a drag reduction system capable of assuring continuous air flow deflection and retention of the air flow along both the sides and the top of the van body.

11. The contoured surface defined in Claim 1 wherein said plurality of vortex generators extends substantially the entire width of the van body and each vortex generator comprises:

    1.    a length between about 65mm and 75mm;

    2.    a height of between about 25mm and 40mm; and

    3.    a spacing between its adjacent vortex generator of about 75mm.

12. The contoured surface defined in Claims 10 and 11 wherein said vortex generators are further defined as being substantially perpendicular to the top portion of the van body and angled relative to the line of motion to the van body.

13. The contoured surface defined in Claims 11 or 12 wherein the angle of the vortex generators is between about 5° and 25° from the line of travel of the van body.

14. The contoured surface defined in Claim 13 wherein said vortex generator angle is further defined as being between about 10° and 20°.

15. The contoured surface defined in Claims 1 to 14 wherein said surface is a substantially unitary moulded plastic piece.

16. A fairing system for mounting to single chassis trucks having a cab portion and a van portion, the fairing system comprising:

    A.    a nose fairing member for mounting to the leading wall of the van portion and incorporating

        1.    a smoothly contoured forward facing surface having a forwardmost projection horizontally disposed along the nose fairing member substantially defining the top of the forward facing surface,

        2.    a rearwardly extending top surface substantially contiguous with and smoothly blended with the forwardmost projection of the forward facing surface and extending therefrom to a substantially horizontal rear mounting edge adapted for attachment to the top surface of the van, and

        3.    two side surfaces in juxtaposed spaced relationship with each other, each of said side surfaces being contiguous with and smoothly blended with opposed side edges of the forward facing surface, extending rearwardly therefrom to terminating, mounting edges, adapted for ready attachment to opposed sides of the van; and

    B.    a plurality of vortex generators in juxtaposed spaced facing relationship to each other and adapted for mounting to the rear top edge of the nose fairing's member,

thereby providing a drag reduction system capable of assuring continuous air flow deflection and retention of the air flow along both the sides of the van and the top of the van.

FIG. 1

FIG.2

"A" "A" 24 24 25

32 28 30

R'

P

22 26 20

28 23

R
P
20 25 30 29
26

21

FIG.3

25

2/2

00447

| | European Patent Office | **EUROPEAN SEARCH REPORT** | Application number |
| --- | --- | --- | --- |
| | | | EP 81 30 3350.3 |

| **DOCUMENTS CONSIDERED TO BE RELEVANT** | | | **CLASSIFICATION OF THE APPLICATION (Int. Cl.³)** |
| --- | --- | --- | --- |
| Category | Citation of document with indication, where appropriate, of relevant passages | Relevant to claim | |
| | DE – A1 – 2 555 422 (DAIMLER-BENZ) * claims 1, 3, 4; fig. 1, 2 * | 1,8, 15,16 | B 62 D 35/00 |
| D | US – A – 4 021 069 (HERSH) * claim 4; column 5, lines 5, 6; fig. 4 * | 3 | |

**TECHNICAL FIELDS SEARCHED (Int. Cl.³)**

B 62 D 35/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
| --- | --- | --- | --- |
| Place of search Berlin | Date of completion of the search 20-10-1981 | Examiner LUDWIG | |

EPO Form 1503.1  06.78